# EUROPÄISCHE PATENTSCHRIFT

(11) **EP 0 897 772 B1**
(45) Veröffentlichungstag und Bekanntmachung des Hinweises auf die Patenterteilung: **08.10.2003**
(21) Anmeldenummer: 98115470.1
(22) Anmeldetag: 18.08.1998
(51) Int. Cl.: B23F 19/10

(54) **Vorrichtung zum Anfasen und Entgraten der stirnseitigen Zahnkanten von Zahnrädern**
Device for chamfering and deburring frontal tooth ends of gears
Dispositif de chanfreinage et d'ébavurage des extrémités frontales de dents des roues dentées

(30) Priorität: 22.08.1997 DE 29715092 U
(43) Veröffentlichungstag der Anmeldung: 24.02.1999
(73) Patentinhaber: THE GLEASON WORKS, Rochester New York 14692-2970 (US)
(72) Erfinder: Huber, Manfred, 81825 München (DE); Schäferling, Karl Josef, 85716 Unterschleissheim (DE)
(74) Vertreter: Stahl, Gerhard F.W.

(56) Entgegenhaltungen:
- DE-A- 2 319 060
- US-A- 3 685 393
- US-A- 4 290 718
- US-A- 4 334 810
- US-A- 5 586 848
- PATENT ABSTRACTS OF JAPAN vol. 014, no. 266 (M-0982), 8. Juni 1990 (1990-06-08) & JP 02 076623 A (YUTAKA SEIMITSU KOGYO KK), 16. März 1990 (1990-03-16)
- KLOCKE F ET AL: "Dry Hobbing - Efficient and Ecological" VDI BERICHTE, DUESSELDORF, DE, Nr. 1230, 1996, Seiten 509-523, XP002147648 ISSN: 0083-5560

## Beschreibung

Die Erfindung betrifft eine Vorrichtung zum Anfasen und Entgraten der stirnseitigen Zahnkanten von gerad- und schrägverzahnten Zahnrädern mit mindestens einem stirnseitig zum Werkstück angeordneten und mit diesem kämmenden die Zahnkanten bearbeitenden Entgratrad, einem axial neben dem Entgratrad angeordneten mit diesem drehfest verbundenen und mit dem Werkstück kämmenden verzahnten Führungsrad, mindestens einer stirnseitig zum Werkstück auf der gleichen Seite wie das Entgratrad drehbar angeordneten die Zahnkanten bearbeitenden Sekundärgratscheibe und mit einem Maschinengestell, das eine Spanneinrichtung für das Werkstück und ein Bett für einen das aus Entgrat- und Führungsrad bestehende Werkzeug und die Sekundärgratscheibe tragenden quer zur Drehachse des Werkstücks zustellbaren Schlitten aufweist.

Eine derartige Vorrichtung ist grundsätzlich aus der DE-AS 23 19 060 und aus dem Firmenprospekt "HURTH Wälzgratwerkzeuge" bekannt. Bei spanend hergestellten Zahnrädern wird an den stimseitigen Zahnkanten ein Grat gebildet, der aus verschiedenen Gründen beseitigt werden muß. Ein solcher Grat ist hinderlich, weil in den folgenden Arbeitsgängen eine Planfläche, zum Beispiel die Stirnfläche des Zahnrads, oft als Spann- und Bestimmungsfläche dienen soll. Ein besonderes Risiko für die Verzahnung ist ein gehärteter Graf, der spätestens beim Lauf im Getriebe abspringt und die Zahnflanken beschädigen kann. Ganz abgesehen davon, daß ein stehengebliebener Grat auch eine Verletzungsgefahr beim Handhaben der Werkstücke darstellt. Aus diesen Gründen werden bereits seit langem zahlreiche Verfahren und Vorrichtungen zum Entfernen des Grates benützt. Doch genügt es zumeist nicht, nur die Grate zu beseitigen. Beim Härten beispielsweise besteht die Gefahr, daß die spitze Kante durch Überkohlung glashart wird und dann unter Belastung ausbricht. Deshalb muß die stirnseitige Zahnkante zusätzlich mit einer Fase versehen werden; sie schützt zudem die aktive Zahnoberfläche vor Beschädigungen. Dieses Ziel wird mit der gattungsgemäßen Vorrichtung erreicht, indem Material des Werkstücks an der Kante zwischen der Zahnflanke und der Stirnfläche verdrängt wird, um eine ein- oder zweiflankige Fase zu erzeugen. Bei dieser plastischen Verformung wird das Material des Werkstücks vom Entgratrad zur Stirnfläche hin verdrängt, wodurch ein sogenannter Sekundärgrat entsteht. Dieser Sekundärgrat wird mit einem Schneidstahl beseitigt. Es sind verschiedene Ausführungsformen dieses als Sekundärgratstahl bezeichneten Schneidstahls bekannt, der beispielsweise als drehbare Scheibe ausgebildet sein kann.

Bei den bekannten Vorrichtungen erfolgt eine Naßbearbeitung des Werkstücks mit einem Schneidöl oder einer Schneidemulsion. Diese Flüssigkeit fördert nicht nur die Bearbeitung des Werkstücks durch Verringerung der Reibung, sondern sie dient auch zum Abführen der entstehenden Späne. Der Einsatz einer solchen Schneidflüssigkeit ist aber mit mehreren Nachteilen verbunden. Nach dem Wälzentgraten wird das Werkstück gehärtet, wobei Schneidöl-Rückstände stören. Außerdem ist Schneidöl verhältnismäßig teuer. Aber nicht nur die Beschaffung, sondern auch die Entsorgung des verbrauchten Schneidöls, das heißt der mit Schneidöl getränkten Stahlspäne verursacht hohe Kosten. Es besteht daher ein Bedürfnis an einer Entgratvorrichtung, die ohne Verwendung einer Schneidflüssigkeit arbeiten kann. Dieses Bedürfnis konnte bisher nicht befriedigt werden, weil die beim Entgraten entstehenden Späne wegen des Fehlens einer Schneidflüssigkeit in der Vorrichtung unkontrolliert umherfliegen und zu Störungen führen. Die Späne können beispielsweise zwischen das Führungsrad und das Werkstück gelangen und in letzteres eingerollt werden, was äußerst störend ist. Ein weiteres Problem bei der trockenen Entgratung besteht in einer gezielten Abfuhr der Späne aus dem Arbeitsbereich. Während bei der Naßbearbeitung die abfließende Schneidflüssigkeit die Späne mitnimmt, besteht bei der trockenen Bearbeitung die Gefahr, daß die unkontrolliert umherfliegenden Späne sich ansammeln und unerwünschte Nester bilden, die den Arbeitsablauf beeinträchtigen können.

Der Erfindung liegt daher die Aufgabe zugrunde, die gattungsgemäße Vorrichtung dahingehend weiterzubilden, daß eine trockene Bearbeitung des Werkstücks möglich ist.

Erfindungsgemäß wird diese Aufgabe dadurch gelöst, daß das Bett werkzeugseitig in Drehrichtung des Werkzeugs näherungsweise um 45° nach hinten geneigt ist, daß der Schlitten nach unten zu der Spanneinrichtung hin zustellbar ist, daß die Sekundärgratscheibe mit dem oberen Bereich des Werkstücks in Eingriff gelangt, daß im Arbeitsbereich eine dem Bett gegenüberliegende Frontwand vorgesehen ist, die entgegen der Drehrichtung des Werkzeugs näherungsweise um 45° nach vorne geneigt ist und somit ein Spantrichter von ungefähr 90° entsteht, und daß das Führungsrad eine mittige Umfangsnut hat.

Durch die geneigte Anordnung des Betts in Drehrichtung des Werkzeugs und damit auch in Drehrichtung der Sekundärgratscheibe wird erreicht, daß die entstehenden Späne nicht zwischen das Werkstück und das Führungsrad gelangen, sondern in dem von dem Bett und der gleichfalls geneigten Frontwand gebildeten Trichter nach unten aus dem Arbeitsbereich abgeleitet werden. Für den Fall, daß beim Entgraten entstehende Späne gleichwohl zwischen das Werkstück und das Führungsrad gelangen sollten, verhindert die mittige Umfangsnut des Führungsrades ein Einwalzen der Späne in die Zahnflanken des Werkstücks.

Um die Gefahr des Eindringens der Späne zwischen das Führungsrad und das Werkstück weiter zu verringern, ist vorgesehen, daß die Sekundärgratscheibe einen nach außen geneigten Umfangsrand hat. Dadurch wird erreicht, daß die gebildeten Späne seitwärts abgeleitet werden.

Da bei der trockenen Entgratung sehr kleine Partikel entstehen, die sich auf dem Führungsrad und auf dem Abrichtrad ablagern können, ist eine Weiterbildung der Erfindung durch eine rotierende Bürste gekennzeichnet, die mit dem Werkzeug in Eingriff bringbar ist, wenn sich der Schlitten in seiner vom Werkstück entfernten oberen Ruhestellung befindet.

Im Hinblick auf die mögliche Ablagerung kleiner Partikel auf dem Werkzeug ist ferner vorgesehen, daß das Führungsrad und das Entgratrad mit einem die Reibung verringernden Material beschichtet sind

Um ein Anhaften der trockenen Späne an den Wänden der Vorrichtung zu verhindern, ist vorgesehen, daß der Innenraum mit rostfreien Blechen mit geringem Eigenmagnetismus ausgekleidet ist.

Eine vorteilhafte Weiterbildung der Erfindung ist gekennzeichnet durch einen Abhebemechanismus, der es ermöglicht, der radialen Zustellbewegung des Werkzeugs eine Abhebebewegung zu überlagern. Dadurch ist es möglich, den Achsabstand von Werkstück und Werkzeug vor dem Zustellen der Sekundärgratscheibe definiert zu vergrößern, so daß die Möglichkeit, daß Späne vom Führungsrad in die Zahnflanken des Werkstücks eingewalzt werden, praktisch ganz ausgeschlossen ist.

Ein Ausführungsbeispiel der Vorrichtung ist in den Zeichnungen dargestellt und wird nachfolgend näher erläutert.
Fig. 1 zeigt die Ansicht der Stirnseite von zwei Werkstückzähnen, deren Kanten an den Zahnenden mit der Vorrichtung, wie schraffiert angedeutet ist, zu brechen sind,
Fig. 2 zeigt schematisch einen Schnitt durch die im Eingriff befindliche Verzahnung des Werkstücks mit dem Werkzeug,
Fig. 3 zeigt einen Schnitt entlang der Linie III-III in Fig. 2 und zwar abgewickelt,
Fig. 4 zeigt einen Schnitt durch das mit zwei Sekundärgratscheiben in Eingriff befindliche Werkstück,
Fig. 5 zeigt eine schematische Seitenansicht der Vorrichtung in der Ladestellung, und
Fig. 6 zeigt in größerem Maßstab einen Ausschnitt aus Fig. 5 in der Betriebsstellung der Vorrichtung, um 45° gedreht.

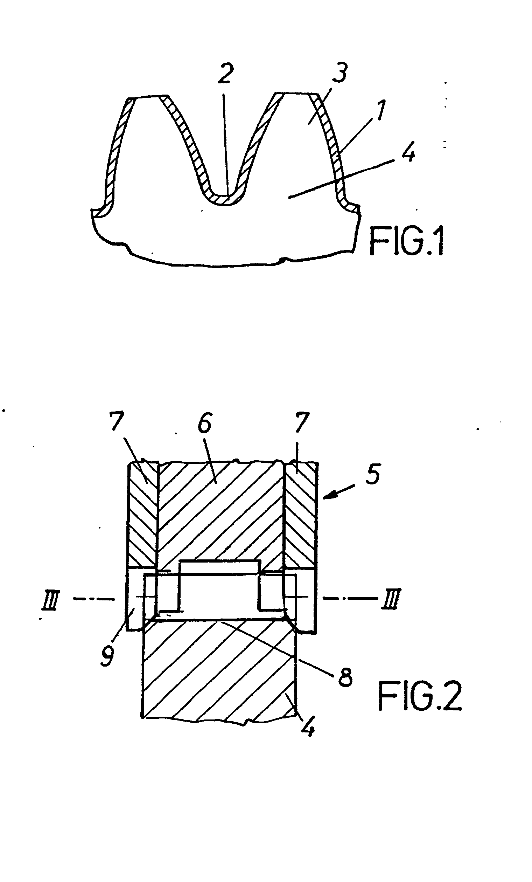

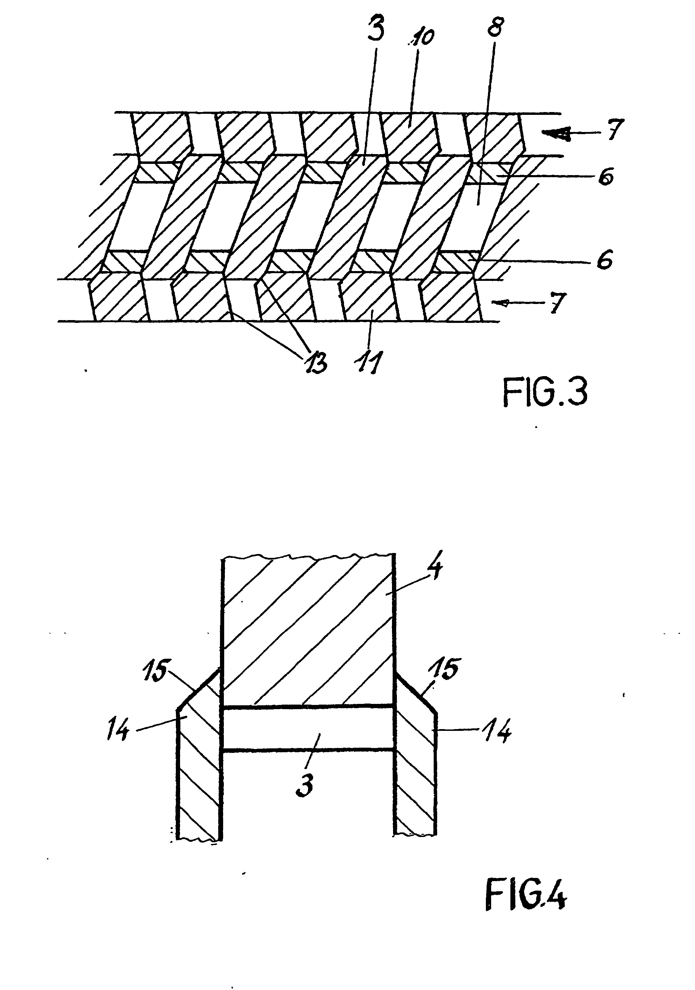

Mit der in den Zeichnungen dargestellten Vorrichtung werden die Stirnkanten 1 und/oder die Grundkanten 2 an den Zahnenden der Zähne 3 eines Werkstücks 4 abgeschrägt bzw. angefast und entgratet. Zu diesem Zweck ist vorgesehen, daß das Werkstück 4 und ein verzahntes Werkzeug 5 mit parallelen Achsen, die nicht dargestellt sind, so aufeinander abwälzen, daß die Zähne dabei kämmen. Das Werkzeug 5 besteht aus einem nicht spanenden verzahnten Führungsrad 6, an dessen beiden Stirnseiten mit bekannten und daher nicht dargestellten Mitteln je ein Entgratrad 7 befestigt ist. Wie aus Fig. 2 hervorgeht, ist das Führungsrad 6 mit einer mittigen Aussparung versehen, so daß eine Umfangsnut 8 gebildet ist. Die Entgraträder sind am Umfang mit Zähnen 9 versehen, die Schrägen außen an den Zahnflanken aufweisen und zwar in der Weise, daß sie von den Stirnseiten her in die Zahnlücken des Werkstücks 4 so eindringen, daß die Flanken der Zähne 9 der Entgraträder 7 die Kanten 1, 2 an den Flanken und im Grund der Zahnlücke an den Enden der Zähne 3 bearbeiten können. In Fig. 3 sind die Zähne 3 des Werkstücks 4, kämmend mit den Zähnen des Führungsrades 6 und der Entgraträder 7 dargestellt. Stirnseitig greifen in die Zahnlücken des Werkstücks 4 die Zähne 10, 11 der Entgraträder 7 ein. Das Werkzeug 5 wird relativ zum Werkstück 4 radial zugestellt, dabei drücken die Flanken 13 der Entgraträder 7 auf die Kanten an den Enden der Zähne 3 des Werkstücks 4, wodurch diese durch plastische Verformung abgeschrägt oder angefast werden. Zur Verringerung der Reibung sind das Führungsrad 6 und die beiden Entgraträder 7 mit einem reibungsarmen Material beschichtet.

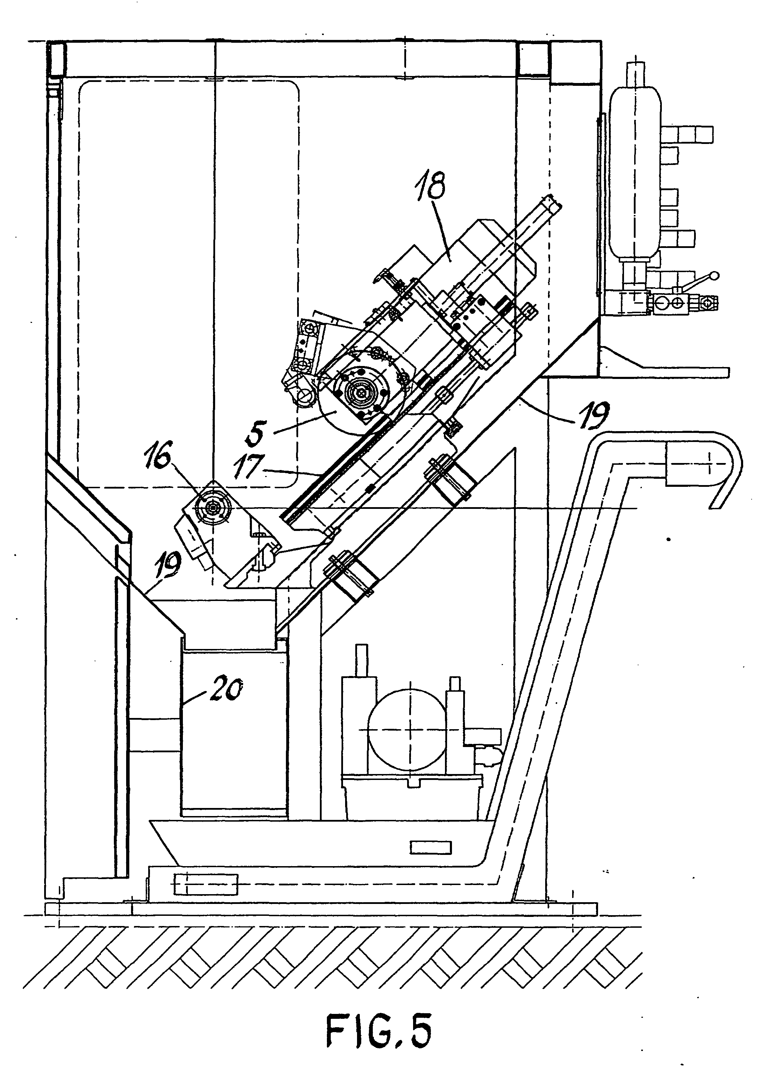

Bei dieser plastischen Verformung wird Material des Werkstücks 4 zu den Stirnflächen hin verdrängt, und es entsteht ein sogenannter Sekundärgrat. Der Materialfluß in Richtung Zahnlücke wird durch das Führungsrad 6 weitestgehend verhindert. Der Sekundärgrat wird mit zwei Sekundärgratscheiben 14 beseitigt, die an beiden Seiten des Werkstücks drehbar, abstands- und winkelveränderlich gelagert sind. Die Achsen des Werkstücks 4 und der beiden Sekundärgratscheiben 14 sind im Abstand parallel angeordnet, so daß die Sekundärgratscheiben 14 die Zähne 3 des Werkstücks 4 überlappen, wie in Fig. 4 gezeigt Damit die bei der Beseitigung des Sekundärgrates entstehenden Späne von dem Werkstück 4 seitwärts abgeleitet werden, haben die Sekundärgratscheiben 14 einen nach außen geneigten Umfangsrand 15.

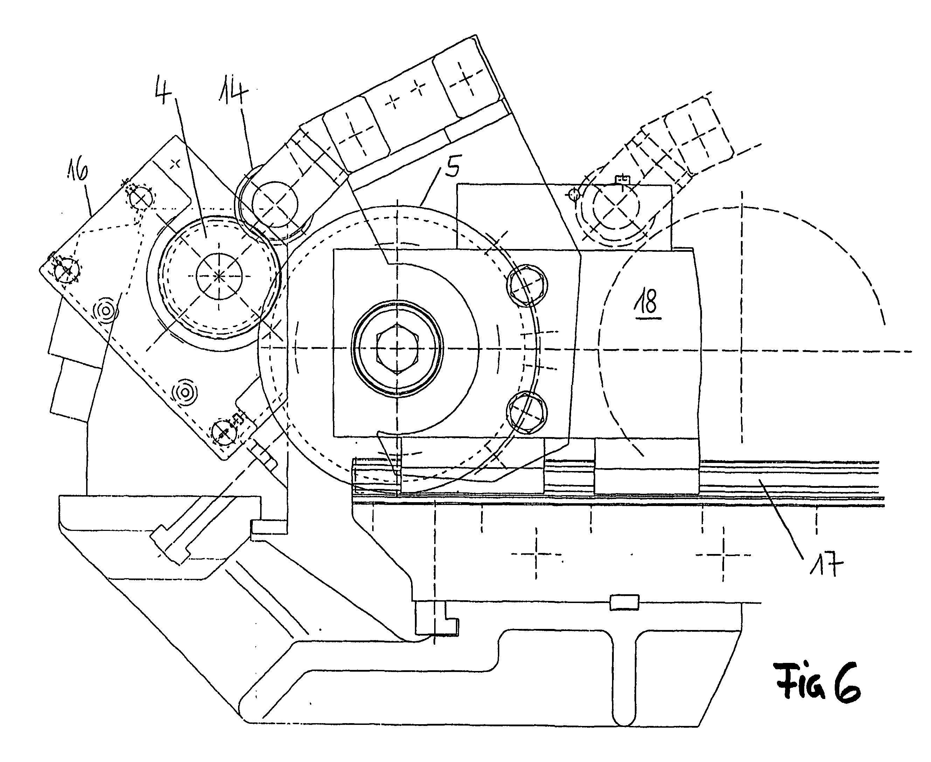

In der Seitenansicht der Vorrichtung nach Fig. 5 sind eine Spanneinrichtung 16 zum Einspannen des Werkstücks und ein sich von dieser unter einem Winkel von näherungsweise 45° nach oben erstreckendes Bett 17 für einen das Werkzeug 5 und die beiden Sekundärgratscheiben 14 tragenden Schlitten 18 gezeigt. Die beiden Sekundärgratscheiben 14 sind derart auf dem Schlitten 18 angeordnet, daß sie am oberen Bereich des Werkstücks 4 anliegen, wenn der Schlitten 18 seine in Fig. 6 gezeigte Betriebsstellung einnimmt.

In der in Fig. 5 gezeigten oberen Stellung des Schlittens 18 kann das Werkzeug 5 mit einer (nicht gezeigten) rotierenden Bürste in Eingriff gebracht werden, um dieses von Spänen und dergleichen zu säubern.

Der Innenraum der Vorrichtung ist mit rostfreien Blechen mit geringem Eigenmagnetismus19 ausgekleidet, die unter einem Winkel von ungefähr 45° geneigt sind. Die Bleche 19 bilden einen Trichter zur Abfuhr der Späne in einen Sammelbehälter 20. Anstelle eines Bodens kann unter dem Sammelbehälter 20 eine Fördereinrichtung zum Abführen der gesammelten Späne angeordnet sein.

Die Drehachsen des Werkstücks 4, des Werkzeugs 5 und der Sekundärgratscheiben 14 sind horizontal, und das Werkzeug 5 wird gemäß der Darstellung nach Fig. 5 und 6 zu einer Verdrehung im Uhrzeigersinn angetrieben. Zum Entgraten eines in die Spanneinrichtung 16 eingespannten Werkstücks 4 wird der Schlitten 18 von der in Fig. 5 gezeigten Stellung auf seinem Bett 17 nach unten zugestellt. Wenn das Führungsrad 6 mit dem Werkstück 4 in Eingriff gelangt, wird das Werkzeug 5 zu einer Verdrehung im Uhrzeigersinn angetrieben. Das Werkstück 4 wird demzufolge im Gegenuhrzeigersinn verdreht. Nach dem Anfasen und Entgraten der Stirnkanten 1 und gegebenenfalls der Grundkanten 2 der Zähne 3 des Werkstücks 4 werden die beiden Sekundärgratscheiben 14 axial zugestellt. Die mit dem Werkstück 4 reibschlüssig in Eingriff gebrachten beiden Sekundärgratscheiben 14 werden daher gemäß der Darstellung nach Fig. 5 und 6 im Uhrzeigersinn verdreht. Durch die besondere räumliche Zuordnung des Werkstücks 4, des Werkzeugs 5 und der beiden Sekundärgratscheiben 14 wird erreicht, daß die bei der Beseitigung des Sekundärgrates erzeugten Späne nach unten in den unter den geneigten Blechen 19 angeordneten Sammelbehälter 20 geschleudert werden. Die Gefahr, daß Späne von dem Führungsrad 6 in die Zahnflanken des Werkstücks 4 eingewalzt werden, ist daher überaus gering. Um diese Möglichkeit praktisch ganz auszuschließen, kann der Achsabstand von Werkstück 4 und Werkzeug 5 vor dem Zustellen der beiden Sekundärgratscheiben 14 definiert vergrößert werden. Zu diesem Zweck kann ein (nicht gezeigter) Abhebemechanismus vorgesehen sein, der es ermöglicht, der radialen Zustellbewegung des Werkzeugs eine Abhebebewegung zu überlagern.

Damit gleichzeitig zwei Verzahnungen entgratet werden können, z. B. bei Wellen, kann auf dem Bett ein weiterer Schlitten gelagert sein, der ein weiteres aus Entgrat- und Führungsrad bestehendes Werkzeug und mindestens eine weitere Sekundärgratscheibe trägt.

## Patentansprüche

1. Vorrichtung zum Anfasen und Entgraten der stirnseitigen Zahnkanten (1) von gerad- und schrägverzahnten Zahnrädern (4) mit mindestens einem stirnseitig zum Werkstück angeordneten und mit diesem kämmenden die Zahnkanten bearbeitenden Entgratrad (7), einem axial neben dem Entgratrad (7) angeordneten mit diesem drehfest verbundenen und mit dem Werkstück (4) kämmenden verzahnten Führungsrad (6) mindestens einer stirnseitig zum Werkstück (4) auf der gleichen Seite wie das Entgratrad (7) drehbar angeordneten die Zahnkanten (1,2) bearbeitenden Sekundärgratscheibe (14) und mit einem Maschinengestell, das eine Spanneinrichtung (16) für das Werkstück (4) und ein Bett (17) für einen das aus Entgrat - (7) und Führungsrad (6) bestehende Werkzeug (5) und die Sekundärgratscheibe (14) tragenden quer zur Drehachse des Werkstücks (4) zustellbaren Schlitten (18) aufweist, **dadurch gekennzeichnet, daß** das Bett (17) werkzeugseitig in Drehrichtung des Werkzeugs (5) näherungsweise um 45° nach hinten geneigt ist, daß der Schlitten (18) nach unten zu der Spanneinrichtung (16) hin zustellbar ist, daß die Sekundärgratscheibe (14) mit dem oberen Bereich des Werkstücks (4) in Eingriff gelangt, daß im Arbeitsbereich eine dem Bett (17) gegenüberliegende Frontwand (19) vorgesehen ist, die entgegen der Drehrichtung des Werkzeugs (5) näherungsweise um 45° nach vorne geneigt ist und somit ein Spantrichter von ungefähr 90° entsteht, und daß das Führungsrad (6) eine mittige Umfangsnut (8) hat.

2. Vorrichtung nach Anspruch 1, **dadurch gekennzeichnet, daß** die Sekundärgratscheibe (14) einen nach außen geneigten Umfangsrand (15) hat

3. Vorrichtung nach Anspruch 1 oder 2, **gekennzeichnet durch** eine rotierende Bürste, die mit dem Werkzeug (5) in Eingriff bringbar ist, wenn sich der Schlitten (18) in seiner vom Werkstück (4) entfernten oberen Ruhestellung befindet.

4. Vorrichtung nach einem der Ansprüche 1 bis 3, **dadurch gekennzeichnet, daß** das Führungsrad (6) und das Entgratrad (7) mit einem die Reibung verringernden Material beschichtet sind.

5. Vorrichtung nach einem der vorhergehenden Ansprüche, **dadurch gekennzeichnet, daß** der Innenraum mit rostfreien Blechen mit geringem Eigenmagnetismus (19) ausgekleidet ist.

6. Vorrichtung nach einem der vorhergehenden Ansprüche, **gekennzeichnet durch** einen Abhebemechanismus, der es ermöglicht, der radialen Zustellbewegung des Werkzeugs (5) eine Abhebebewegung zu überlagern.

7. Vorrichtung nach einem der vorhergehenden Ansprüche, **dadurch gekennzeichnet, daß** auf dem Bett (17) ein weiterer Schlitten gelagert ist, der ein weiteres aus Entgrat- und Führungsrad bestehendes Werkzeug und eine weitere Sekundärgratscheibe trägt.

## Claims

1. Device for chamfering and deburring frontal tooth ends (1) of spur toothed and spiral toothed gears (4) having at least one deburring wheel (7) machining the tooth ends, arranged on the face of the workpiece and meshing with it, a toothed guide wheel (6) arranged axially adjacent to the deburring wheel (7) and linked to it in non-slip manner and meshing with the workpiece (4), at least one secondary deburring disk (14) arranged rotatably on the face of the workpiece (4) on the same side as the deburring wheel (7) and machining the tooth ends (1, 2) and a machine chassis having a clamping arrangement (16) for the workpiece (4), and a bed (17) for a tool (5) comprising the deburring wheel (7) and the guide wheel (6) and a sliding carriage (18) adjustable transverse to the rotation axis of the workpiece (4) bearing the secondary deburring disk (14), **characterised in that** the bed (17) is tilted backwards on the tool side in the rotation direction of the tool (5) by approximately 45°, that the sliding carriage (18) is adjustable downwards towards the clamping arrangement (16), that the secondary deburring disk (14) comes into engagement with the upper region of the workpiece (4), that in the working area, a front wall (19) opposing the bed (17) is provided, said wall being tilted at approximately 45° forwards against the rotation direction of the tool (5) and that thereby a chip funnel of approximately 90° is produced, and that the guide wheel (6) has a central circumferential groove (8).

2. Device according to Claim 1, **characterised in that** the secondary deburring disk (14) has a circumferential edge (15) tilted outwards.

3. Device according to Claim 1 or 2, **characterised in that** it has a rotating brush which may be brought into engagement with the tool (5) when the sliding carriage (18) is in its upper rest position removed from the workpiece (4).

4. Device according to one of the claims 1 to 3, **characterised in that** the guide wheel (6) and the deburring wheel (7) are coated with a friction-reducing material.

5. Device according to one of the previous claims, **characterised in that** the internal space is clad with rustproof metal sheets(19) of low self-magnetism.

6. Device according to one of the previous claims, **characterised in that** it has a lifting mechanism which enables a lifting movement to be overlaid on the radial adjustment movement of the tool (5).

7. Device according to one of the previous claims, **characterised in that** mounted on the bed (17) is a further sliding carriage which carries a further tool comprising a deburring wheel and a guide wheel and a further secondary deburring disk.

## Revendications

1. Dispositif pour chanfreiner et ébavurer les arêtes frontales (1) des dents de roues dentées à dentures à flancs droits et obliques (4), comprenant au moins une roue d'ébavurage (7) disposée frontalement par rapport à la pièce à usiner et engrenant avec cette dernière, qui usine les arêtes des dents, une roue de guidage dentée (6) placée à côté de la roue d'ébavurage (7), solidaire en rotation de cette dernière et engrenant avec la pièce à usiner (4), au moins une roue d'ébavurage secondaire (14) disposée de manière rotative frontalement par rapport à la pièce à usiner (4) et sur le même côté que la roue d'ébavurage (7), qui usine les arêtes (1, 2) des dents, et comprenant également un bâti qui présente un dispositif de serrage (16) pour la pièce à usiner (4) et un banc (17) pour un chariot (18) qui porte l'outil (5) constitué de la roue d'ébavurage (7) et de la roue de guidage (6), et la roue d'ébavurage secondaire (14), et qui peut être approché transversalement par rapport à l'axe de rotation de la pièce à usiner (4), **caractérisé en ce que**, côté outil, le banc (17) est incliné d'environ 45° vers l'arrière dans le sens de rotation de l'outil (5), **en ce que** le chariot (18) peut être approché du dispositif de serrage (16) en le faisant descendre, **en ce que** la roue d'ébavurage secondaire (14) se met en prise avec la partie supérieure de la pièce à usiner (4), **en ce que**, dans la zone de travail, une paroi frontale (19) est prévue, qui fait face au banc (17) et qui est inclinée d'environ 45° vers l'avant dans le sens inverse au sens de rotation de l'outil (5), formant ainsi une trémie pour copeaux d'environ 90°, et **en ce que** la roue de guidage (6) comporte une rainure périphérique centrale (8).

2. Dispositif selon la revendication 1, **caractérisé en ce que** la roue d'ébavurage secondaire (14) présente un bord circonférentiel (15) incliné vers l'extérieur.

3. Dispositif selon la revendication 1 ou 2, **caractérisé par** une brosse rotative pouvant être mise en prise avec l'outil (5) lorsque le chariot (18) se trouve dans sa position de repos haute dans laquelle il est éloigné de la pièce à usiner (4).

4. Dispositif selon l'une des revendications 1 à 3, **caractérisé en ce que** la roue de guidage (6) et la roue d'ébavurage (7) sont recouvertes d'une matière réduisant les frottements.

5. Dispositif selon l'une des revendications précédentes, **caractérisé en ce que** l'intérieur est habillé de tôles inoxydables à faible magnétisme intrinsèque (19).

6. Dispositif selon l'une des revendications précédentes, **caractérisé par** un mécanisme d'enlèvement permettant de donner la priorité à un mouvement d'enlèvement sur le mouvement d'approche radial de l'outil (5).

7. Dispositif selon l'une des revendications précédentes, **caractérisé en ce qu'**un chariot supplémentaire est monté sur le banc (17), qui porte un outil supplémentaire composé d'une roue d'ébavurage et d'une roue de guidage, et une roue d'ébavurage secondaire supplémentaire.
